# EUROPEAN PATENT SPECIFICATION

(11) **EP 4 577 498 B1**
(45) Date of publication and mention of the grant of the patent: **08.07.2026**
(21) Application number: 23757911.5
(22) Date of filing: 17.08.2023
(51) Int. Cl.: C01G 53/00, H01M 4/525

(54) **PROCESS FOR THE PREPARATION OF NICKEL OXIDE**
VERFAHREN ZUR HERSTELLUNG VON NICKELOXID
PROCÉDÉ DE PRÉPARATION D'OXYDE DE NICKEL

(30) Priority: 23.08.2022 EP 22191670; 14.03.2023 EP 23161751
(43) Date of publication of application: 02.07.2025
(73) Proprietor: BASF SE, 67056 Ludwigshafen am Rhein (DE)
(72) Inventor: DOMASCHKE, Maximilian, 67056 Ludwigshafen am Rhein (DE); BOEHLING, Ralf, 67056 Ludwigshafen am Rhein (DE); WOLFER, Sebastian, 67056 Ludwigshafen am Rhein (DE); INCERA GARRIDO, Gerardo, Shanghai 200137 (CN); EBERLE, Felix, 67056 Ludwigshafen am Rhein (DE); EHRHARDT, Kai Rainer, 67056 Ludwigshafen am Rhein (DE)
(74) Representative: BASF IP Association
(86) International application number: PCT/EP2023/072733
(87) International publication number: WO 2024/041978

(56) References cited:
- CN-A- 104 480 326
- GB-A- 1 032 750
- US-A1- 2004 086 447
- US-A1- 2020 365 904

## Description

The present invention relates to a process for the preparation of NiO particles.

Nickel oxide (NiO) particles are useful for many technical applications, including as cathode active material (CAM).

The classical manufacturing route for cathode active material (CAM) proceeds via the precipitation of the sulphates of Ni, Co and Mn with NaOH as mixed metal hydroxides. During this precipitation, a large amount of Na₂SO₄ is generated (more than 1 kg per kg of final CAM). To convert the mixed metal hydroxides to oxide material water has to be removed in an energy-intense pre-calcination step. Furthermore, metal sulphates are costly starting materials since they are produced at a late step in the base metal refinery value chain.

Alternatively, the preparation of nickel oxide nanoparticles starts with Ni metal. A source for relatively pure nickel metal is the decomposition of nickel tetracarbonyl (Handbook of non-ferrous metal powders, Elsevier Ltd. 2009, chapter 17). However, this multistep approach causes further costs.

Thus, there is a need for an improved preparation process that avoids the above-mentioned disadvantages and is cost effective, has a good environmental balance, avoids high salt loads and can result in pure CAM.

GB 1 032 750 A relates to a process, where nickel carbonyl is removed from town gas by reaction with oxygen in the presence of alumina (see abstract). Nickel oxide is deposited on the alumina support.

Accordingly, an object of the present invention is to provide such a process for the preparation of nickel oxide.

The object is achieved by a process for the preparation of NiO particles comprising the step of a₀) contacting a Ni(CO)₄ gas stream having a temperature of less than 100 °C with an oxidizing gas stream to directly yield NiO particles in a product stream of a reactor.

The inventors have found that it is possible to directly obtain nickel oxide from nickel carbonyl without the intermediate step of the decomposition of Ni carbonyl to Ni metal resulting in the above characteristics of the process. Especially, the main economical potential arises from the facts that appropriate Ni sources can be accessed early in the metal value chain and that fewer process steps may be required to produce CAM. Furthermore, the costly treatment of salt, especially sodium sulphate, byproduct can be avoided. The process of the present invention can be applied to produce material that can be further converted to CAM. It is possible to produce material of especially high purity.

The process of the present invention comprises the step of contacting a Ni(CO)₄ gas stream having a temperature of less than 100 °C with an oxidizing gas stream to directly yield NiO particles in a product stream of a reactor.

In order to prepare a Ni(CO)₄ gas stream, metallic Ni can be treated with carbon monoxide at elevated pressure (e.g. above 1 bar) and elevated temperatures (e.g. 30 - 200 °C) which leads to the formation of Ni(CO)₄ according to the following reaction equation:

*Ni +* 4*CO* → *Ni*(*CO*)₄

Accordingly, in a preferred embodiment the process of the present invention comprises a step of
a₋₁) treating metallic Ni with carbon monoxide at elevated pressure and elevated temperature to yield the Ni(CO)₄ gas stream optionally containing unreacted carbon monoxide.

The reaction step a₋₁) can be carried out in a first reactor wherein step a₀) can be carried out in a second reactor.

Preferably, the elevated pressure is above atmospheric pressure and below 30 MPa. More preferably, the elevated pressure is between 0.5 MPa and 20 MPa.

Preferably, the elevated temperature is in the range from 30 °C to 200 °C. More preferably, the temperature is in the range from 50 °C to 180 °C.

Unreacted CO may be recycled be separation from the product stream. Also, certain other metals that are part of some feed materials such as Fe and Co may be carbonylated, leading to an impure product. In this case, distillation can be performed to purify the nickel tetracarbonyl. Especially the hydrocarbonyl of cobalt - CoH(CO)₄ - can be a valuable side product that can be used analogously to Ni(CO)₄. It forms in the presence of both carbon monoxide and hydrogen.

Accordingly, in a preferred embodiment unreacted carbon monoxide is separated off and the separated carbon monoxide is optionally used in step a₋₁).

Preferably, the Ni(CO)₄ gas stream is purified before used in step a₀), more preferably by distillation.

In a preferred embodiment the process of the present invention starts from appropriate Ni feeds, like Ni metal, Ni Matte, Mixed Hydroxide Precipitate (MHP), NiS containing mixed sulfide precipitate, or Black Mass, which can undergo pretreatment in a hydrogen atmosphere to reduce the Ni to its metallic state in case the starting material is not already Ni metal.

Accordingly, in a preferred embodiment of the present invention the process of the present invention comprises a step
a₋₂) reducing Ni matte, Ni(OH)₂ containing mixed hydroxide precipitates, NiS containing mixed sulfide precipitate, NiO containing black mass or a mixture thereof in a hydrogen stream to yield metallic Ni.

Especially Ni Matte, MHP and black mass offer attractive feed materials since they are either extracted at an early point in the Ni value chain (Ni Matte and MHP) or come from a recycling process of batteries and accumulators (black mass).

The optional purified stream is inserted into a reactor where it is brought into contact, e.g. by mixing, with a preferably preheated oxidizing gas such as air or oxygen, preferably at a high level of turbulence. This will result in the decomposition of nickel tetracarbonyl to nickel oxide, which will be finely disperse due to the high supersaturations that can be achieved as a result of the high reaction rates and low vapor pressure of NiO, and carbon monoxide or carbon dioxide, respectively.

The reaction is highly exothermal so that the reaction temperature is high enough to directly oxidize Ni tetracarbonyl to NiO without prior decomposition of Ni tetracarbonyl to metallic Ni. In order to prevent said decomposition, the Ni tetracarbonyl gas stream has a temperature of below 100 °C, preferably from 30 °C to 90 °C, more preferably, in the range from 40 °C to 80 °C, even more preferably, in the range from 45 °C to 70 °C, even more preferably, in the range from 50 °C to 60 °C.

Preferably, the oxidizing gas stream is preheated, which is another option for reaction temperature adjustment.

Accordingly, in a preferred embodiment the oxidizing gas stream in step a₀) is preheated. Preferably, the temperature is in the range from 50 °C to 750 °C. More preferably, the temperature is between 150 and 500 °C.

Preferably, the oxidizing gas is oxygen or an oxygen containing gas, like air or a mixture of air and oxygen.

Preferably, step a₀) can be performed either in an injector where the high flow velocities allow for a flameless oxidation or in a two-component nozzle where a spray flame could be established. In both cases, an adiabatic tube reactor is attached to the mixing point, allowing for a certain residence time at high temperatures to ensure full conversion of the nickel tetracarbonyl and to allow for the development of a defined nickel oxide particle morphology.

The reactor off gas containing the nickel oxide particles can be consecutively cooled by mixing with cold air and heat exchangers before entering an appropriate filter unit for product separation such as a baghouse filter or an electrostatic precipitator. The obtained nickel oxide nanoparticles can be further processed to CAM materials by mixing with metal oxides of cobalt and manganese and consecutive thermal or mechanical treatment.

Accordingly, in a preferred embodiment step a₀) is carried out in an injector where preferably high flow velocities allow for a flameless oxidation. Preferred velocities will depend on the temperature of the oxidizing gas and its mass ratio with the Ni(CO)₄. A preferred requirement will be a Reynolds number in the turbulent regime (thus, Re > 4000) in the injector.

In a further preferred embodiment step a₀) is carried out in a two-component nozzle where a spray flame can be established.

Preferably, the reactor in step a₀) is at least partly an adiabatic tube reactor, more preferably an adiabatic reactor.

Preferably, the product stream is cooled, preferably with air having a lower temperature compared to the temperature of the product stream and one or more heat exchangers. A suitable temperature of the product stream after cooling is below 250 °C. The heat exchangers can be coupled with the oxidizing gas stream in order to transfer heat and to generate a preheated oxidizing gas stream for step a₀).

Preferably, the NiO particles are separated off from the product stream, preferably in a filter unit for product separation such as a baghouse filter or an electrostatic precipitator to yield the NiO particles.

As mentioned above, the NiO particles are preferably further processed to cathode active material by mixing with other metal oxides, like cobalt and/or manganese and consecutive thermal and/or mechanical treatment. The NiO particles obtained by the present process typically show a particle size of less than 1 µm, i.e. nanoparticles as can be shown by electron microscopy.

Preferably, step a₀) is carried out at a temperature in the range from 150 °C to 1200 °C. More preferably, step a₀) is carried out at a temperature in the range from 200 °C to 1000 °C.

The Ni(CO)₄ gas stream in step a₀) can further contain carbon monoxide. It is preferred that in case the product stream comprises carbon monoxide, said CO is separated and fed back into step a₋₁).

The resulting NiO product is suitable to be used in the preparation of Cathode Active Material (CAM). CAM is the active composition of a cathode. The preparation of CAM is well known and described e.g. in WO 2021/156124 A1, WO 2022/101103 A1 and WO 2022/263226 A1.

Accordingly, another aspect of the present invention is a process for the preparation of a NiO particles containing cathode active material comprising the steps of
b₁) preparing NiO particles according to the process for the preparation of NiO particles of the present invention;
b₂) mixing the NiO particles with one or more other metal oxides and optionally with one or more other components of the cathode active material; and
b₃) calcining the mixture of step b₂) in order to obtain the cathode active material.

Typical metal oxides for mixing with NiO particles are Cobald oxides, nickel oxides or both, Co oxides and Ni oxides, preferably both Co oxides and Ni oxides. Other components of the CAM that can be added are e.g. a Lithium source, a Natrium source or both, a Li source and a Na source.

A typical Li source is LiOH, L₂CO₃, Li₂O, Li₂O₂ or mixtures thereof. A typical Na source is NaOH, Na₂CO₃, Na₂O, Na₂O₂ or mixtures thereof.

The calcination temperature to be used in step b₃) depends on the specific CAM and typically ranges from 600°C to 1200°C, preferably from 800°C to 1000°C.

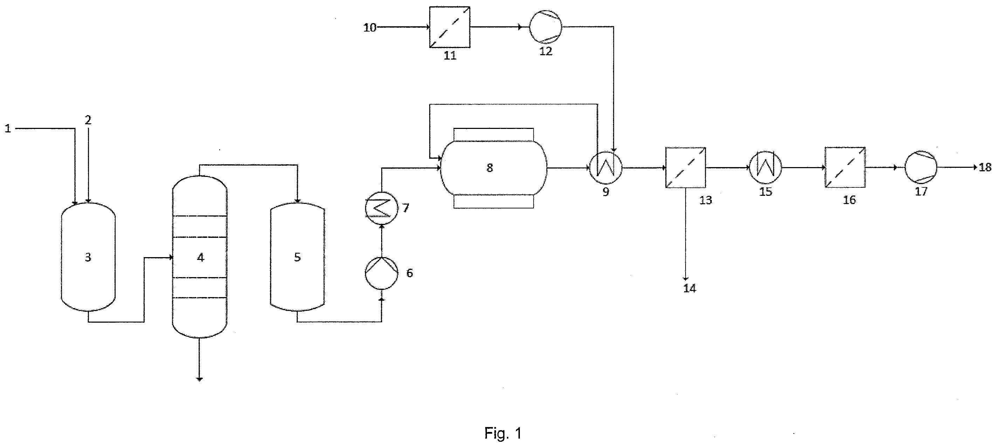

Fig. 1 shows a preferred process of the present invention starting with step a₋₁).

In Fig. 1 a metallic Ni feed (1) that may be obtained by a reductive pretreatment (step a₋₂), not shown) is introduced together with carbon monoxide feed (2) in a carbonylation reactor (3) and the resulting product is transferred into a distillation column (4). The Ni tetracarbonyl feed is transferred to a storage tank (5). The liquid Ni tetracarbonyl is pumped by liquid pump (6) to the pyrolysis reactor (8) via evaporator (7), where an air feed (10) is added to reactor (8) after passing a prefilter (11), compressor (12) and heat exchanger (9). The product stream in reactor (8) is filtered in filter (13) (e.g. Baghouse or electrostatic precipitator) to separate the NiO particles (14) via heat exchanger (9) from the exhaust gas (18) that passes a further heat exchanger (15), HEPA filter (16) and vacuum pump (17).

### Examples

In one example of the process, Ni powder was pretreated for 6 hours at a temperature of 280 °C with hydrogen to remove any NiO passivation layer. Consecutively, the Ni powder was treated with carbon monoxide at a temperature of 100 °C and a pressure of 0.1 MPa. The mixture of carbon monoxide and Ni(CO)₄ that resulted from this treatment was transferred to the oxidation reactor and contacted with a stream of air preheated to 200 °C and having an average flow velocity of about 340 m/s. The NiO nanoparticles that formed in the oxidation of the Ni(CO)₄ were collected by thermophoresis for analysis.

### Reference mark list

- 1: Ni feed
- 2: Carbon monoxide
- 3: Carbonylation reactor
- 4: Distillation column
- 5: Storage tank
- 6: Liquid pump
- 7: Evaporator
- 8: Pyrolysis reactor
- 9: Heat exchanger
- 10: Air
- 11: Prefilter
- 12: Compressor
- 13: Filter
- 14: NiO particles
- 15: Heat exchanger
- 16: HEPA-Filter
- 17: Vacuum pump
- 18: Exhaust gas

## Claims

1. A process for the preparation of NiO particles comprising the step of
a₀) contacting a Ni(CO)₄ gas stream having a temperature of less than 100 °C with an oxidizing gas stream to directly yield NiO particles in a product stream of a reactor.

2. The process of claim 1, wherein the Ni(CO)₄ gas stream is prepared by a step preceding step a₀), wherein the step is
a₋₁) treating metallic Ni with carbon monoxide at elevated pressure and elevated temperature to yield the Ni(CO)₄ gas stream optionally containing unreacted carbon monoxide, wherein the elevated pressure is above atmospheric pressure and below 30 MPa and wherein the elevated temperature is in the range from 30 °C to 200 °C and wherein the metallic Ni is optionally prepared by a step preceding step a₋₁), where the step is
a₋₂) reducing Ni matte, Ni(OH)₂ containing mixed hydroxide precipitates, NiS containing mixed sulfide precipitate, NiO containing black mass or a mixture thereof in a hydrogen stream to yield metallic Ni.

3. The process of claim 1 or 2, wherein unreacted carbon monoxide is separated off and the separated carbon monoxide is optionally used in step a₋₁).

4. The process of any of claims 1 to 3, wherein the Ni(CO)₄ gas stream is purified, preferably by distillation, before used in step a₀).

5. The process of any one of claims 1 to 4, wherein the oxidizing gas in step a₀) is preheated, preferably to a temperature in the range from 50 °C to 750 °C.

6. The process of any one of claims 1 to 5, wherein the oxidizing gas is oxygen or an oxygen containing gas, like air or a mixture of air and oxygen.

7. The process of any one of claims 1 to 6, wherein the contacting in step a₀) comprises a mixing step;
and/or
wherein step a₀) is carried out in an injector where preferably high flow velocities allow for a flameless oxidation or in a two-component nozzle where a spray flame can be established;
and/or
wherein the reactor in step a₀) is at least partly an adiabatic tube reactor;
and/or
wherein contacting in step a₀) is carried out at a temperature in the range from 150 °C to 1200 °C;
and/or
wherein the Ni(CO)₄ gas stream in step a₀) further contains carbon monoxide;
and/or
wherein in step a₀) the Ni(CO)₄ gas stream has a temperature in the range from 30 °C to 90 °C, preferably in the range from 40 °C to 80 °C, more preferably in the range from 40 °C to 80 °C, even more preferably in the range from 45 °C to 70 °C, even more preferably in the range from 50 °C to 60 °C.

8. The process of any of claims 1 to 7, wherein the product stream is cooled, preferably with air having a lower temperature compared to the temperature of the product stream and one or more heat exchangers.

9. The process of any of claims 1 to 8, wherein the NiO particles are separated off from the product stream, preferably in a filter unit for product separation such as a baghouse filter or an electrostatic precipitator to yield the NiO particles.

10. The process of any one of claims 1 to 9, wherein the NiO particles are further processed to cathode active material by mixing with other metal oxides, like cobalt and/or manganese and consecutive thermal and/or mechanical treatment.

11. The process of any one of claims 1 to 10, wherein the product stream comprises carbon monoxide, which is separated and fed back into step a₋₁).

12. A process for the preparation of a NiO particles containing cathode active material comprising the steps of
b₁) preparing NiO particles according to the process for the preparation of NiO particles of any one of claims 1 to 11;
b₂) mixing the NiO particles with one or more other metal oxides and optionally with one or more other components of the cathode active material; and
b₃) calcining the mixture of step b₂) in order to obtain the cathode active material.

13. The process of claim 12, wherein the one or more other metal oxides are cobalt oxides, nickel oxides or both, Co oxides and Ni oxides.

14. The process of claim 12 or 13, wherein in step b₂) NiO particles are mixed with one or more other metal oxides and with one or more other components of the cathode active material, wherein the one or more other component is preferably a Lithium source.

15. The process of any one of claims 12 to 14, wherein in step b₂) NiO particles are mixed with one or more other metal oxides and with one or more other components of the cathode active material, wherein the one or more other component is preferably a Natrium source.

## Patentansprüche

1. Ein Verfahren zur Herstellung von NiO-Teilchen, enthaltend den Schritt
a₀) Kontaktieren eines Ni(CO)₄ Gasstroms mit einer Temperatur unter 100 °C mit einem oxidierenden Gasstrom, um NiO-Partikel direkt in einem Produktstrom eines Reaktors zu erzeugen.

2. Verfahren nach Anspruch 1, bei dem der Ni(CO)₄ Gasstrom durch einen Schritt vor Schritt a₀ vorbereitet wird, wobei der Schritt lautet
a₋₁) Behandle metallisches Ni mit Kohlenmonoxid bei erhöhtem Druck und erhöhter Temperatur, um das Ni(CO)₄ zu erzeugen, wobei der Gasstrom optional nicht reagiertes Kohlenmonoxid enthält, wobei der erhöhte Druck über dem atmosphärischen Druck und unter 30 MPa liegt und die Temperatur im Bereich von 30 °C bis 200 °C liegtund wobei das metallische Ni optional durch einen Schritt vor Schritt a₋₁) vorbereitet wird, wobei der Schritt ist
a₋₂) Reduktion von Ni Matte, Ni(OH)₂ mit gemischten Hydroxidausfällungen, NiS mit gemischten Sulfidausfällungen, NiO mit schwarzer Masse oder einer Mischung davon in einem Wasserstoffstrom, um metallisches Ni zu erzeugen.

3. Verfahren nach Anspruch 1 oder 2, bei dem nicht reagiertes Kohlenmonoxid abgetrennt und das abgetrennte Kohlenmonoxid optional im Schritt a verwendet wird₋₁).

4. Verfahren nach einem der Ansprüche 1 bis 3, bei dem der Ni(CO)₄ Gasstrom wird gereinigt, vorzugsweise durch Destillation, bevor er in Schritt a0 verwendet wird).

5. Verfahren nach einem der Ansprüche 1 bis 4, bei dem das oxidierende Gas im Schritt a₀) vorgeheizt wird, vorzugsweise auf eine Temperatur im Bereich von 50 °C bis 750 °C.

6. Verfahren nach einem der Ansprüche 1 bis 5, bei dem das oxidierende Gas Sauerstoff oder ein sauerstoffhaltiges Gas ist, wie Luft oder ein Gemisch aus Luft und Sauerstoff.

7. Das Verfahren nach einem der Ansprüche 1 bis 6, wobei das Kontaktieren in Schritt a₀) einen Mischschritt umfasst;
und/oder
wobei Schritt a₀) in einem Injektor, bei dem vorzugsweise hohe Durchflussgeschwindigkeiten eine flammenlose Oxidation ermöglichen, oder in einer zweiteiligen Düse, in der eine Sprühflamme hergestellt werden kann, durchgeführt wird;
und/oder
wobei der Reaktor in Schritt a₀) zumindest teilweise ein adiabatischer Röhrenreaktor ist; und/oder
wobei der Kontakt im Schritt a₀) bei einer Temperatur im Bereich von 150 C bis 1200 °C erfolgt;
und/oder
wobei der Ni(CO)₄ Gasstrom in Schritt a₀) außerdem Kohlenmonoxid enthält;
und/oder
wobei in Schritt a0) der Ni(CO)₄-Gasstrom° eine Temperatur im Bereich von 30 °°C bis 90 °C hat°, vorzugsweise im Bereich von 40 °°C bis 80 °°C, noch °bevorzugter im Bereich von 45 °°C bis 70 °°C, noch mehr bevorzugt im Bereich von 50 °°C bis 60 °°C.

8. Verfahren nach einem der Ansprüche 1 bis 7, bei dem der Produktstrom abgekühlt wird, vorzugsweise mit Luft, die eine niedrigere Temperatur hat als die Temperatur des Produktstroms und einem oder mehreren Wärmetauschern.

9. Verfahren nach einem der Ansprüche 1 bis 8, bei dem die NiO-Partikel vom Produktstrom getrennt werden, vorzugsweise in einer Filtereinheit zur Produkttrennung, wie einem Filterfilter oder einem elektrostatischen Präzipitator, um die NiO-Partikel zu erzeugen.

10. Verfahren nach einem der Ansprüche 1 bis 9, bei dem die NiO-Partikel durch Vermischung mit anderen Metalloxiden wie Kobalt und/oder Mangan und anschließend thermisch und/oder mechanisch behandelt werden, weiterverarbeitet werden.

11. Verfahren nach einem der Ansprüche 1 bis 10, bei dem der Produktstrom Kohlenmonoxid enthält, das abgetrennt und in Schritt a₋₁) zurückgeführt wird.

12. Verfahren zur Herstellung von einem kathodenaktives Material, das NiO-Partikel enthält, enthaltend die Schritte
b₁) die Herstellung von NiO-Partikeln gemäß dem Verfahren zur Herstellung von NiO-Partikeln eines der Ansprüche 1 bis 11;
b₂) die NiO-Partikel mit einem oder mehreren anderen Metalloxiden und optional mit einem oder mehreren anderen Komponenten des aktiven Kathodenmaterials zu mischen; und
b₃) Calcinierung der Mischung aus Schritt b₂) um das Kathodenaktivmaterial zu erhalten.

13. Verfahren nach Anspruch 12, bei dem ein oder mehrere andere Metalloxide Kobaltoxid oder Nickeloxid oder Kobaltoxid und Nickeloxid sind.

14. Verfahren nach Anspruch 12 oder 13, bei dem in Schritt b₂) NiO-Partikel mit einem oder mehreren anderen Metalloxiden und mit einem oder mehreren anderen Komponenten des kathodenaktiven Materials gemischt werden, wobei eine oder mehrere andere Komponenten vorzugsweise eine Lithiumquelle sind.

15. Verfahren nach einem der Ansprüche 12 bis 14, bei dem in Schritt b₂) NiO-Partikel mit einem oder mehreren anderen Metalloxiden und mit einem oder mehreren anderen Komponenten des kathodenaktiven Materials vermischt werden, wobei eine oder mehrere andere Komponenten vorzugsweise eine Natriumquelle sind.

## Revendications

1. Un procédé de production de particules NiO, contenant l'étape suivante
a0) Contacter un Ni(CO)₄ débit de gaz à température inférieure à 100 °C avec un flux gazeux oxydant pour générer des particules de NiO directement dans un flux produit d'un réacteur.

2. La méthode de la revendication 1, dans laquelle le Ni(CO)₄ Le débit de gaz est préparé par un pas avant l'étape a0, où l'étape est
a₋₁) Traiter le Ni métallique avec du monoxyde de carbone à une pression et une température accrues afin de réduire le Ni(CO)₄ pour générer, où le flux gazeux contient éventuellement du monoxyde de carbone non réagi, où la pression augmentée est au-dessus de la pression atmosphérique et inférieure à 30 MPa, et la température est dans la fourchette de 30 °C bis 200 °C et où le Ni métallique est éventuellement remplacé par une étape avant l'étape a₋₁), où l'étape est
a₋₂) Réduction von Ni Matte, Ni(OH)₂ avec des précipitations mixtes d'hydroxyde, NiS avec des précipitations sulfurées mixtes, NiO avec masse noire, ou un mélange de ceux-ci dans un flux d'hydrogène pour produire du Nie métallique.

3. Une méthode selon la revendication 1 ou 2, dans laquelle le monoxyde de carbone non réagi est séparé et le monoxyde de carbone séparé est utilisé en option à l'étape (a)₋₁).

4. Une méthode selon l'une des revendications 1 à 3, dans laquelle le Ni(CO)₄ Le jet de gaz est purifié, de préférence par distillation, avant d'être utilisé à l'étape a0).

5. Une méthode selon l'une des revendications 1 à 4, dans laquelle le gaz oxydant est préchauffé à l'étape a0), de préférence à une température comprise entre 50 °C jusqu'à 750 °C.

6. Une méthode selon l'une des revendications 1 à 5, dans laquelle le gaz oxydant est de l'oxygène ou un gaz oxygéné, comme l'air ou un mélange d'air et d'oxygène.

7. La méthode de l'une des revendications 1 à 6, où le contact à l'étape (a0) comprend une étape mixte ;
et/ou
où l'étape a₀) est réalisée dans un injecteur, où les débits élevés permettent de préférence une oxydation sans flamme, ou dans une buse en deux parties où une flamme pulvérisatrice peut être produite ;
et/ou
où le réacteur à l'étape a0) est au moins en partie un réacteur à tubes adiabatique ;
et/ou
où le contact à l'étape a0) à une température allant de 150 °C à 1200 °C °C;
et/ou
où le Ni(CO)₄ flux gazeux à l'étape a0) contient également du monoxyde de carbone ;
et/ou
où l'étape (a0) du flux de gaz Ni(CO)₄ a ° une température comprise entre 30 °°C et 90 °C°, de préférence entre 40 °°C et 80 °°C, et ° encore plus de préférence entre 45 °°C et 70 °°C, et de préférence entre 50 °°C et 60 °°C.

8. Une méthode selon l'une des revendications 1 à 7, dans laquelle le flux de produit est refroidi, de préférence avec de l'air ayant une température inférieure à celle du flux de produit et un ou plusieurs échangeurs de chaleur.

9. Une méthode selon l'une des revendications 1 à 8, dans laquelle les particules de NiO sont séparées du flux produit, de préférence dans une unité de filtration pour la séparation du produit, comme un filtre filtre ou un précipitateur électrostatique, afin de produire les particules de NiO.

10. Un procédé selon l'une des revendications 1 à 9, dans lequel les particules de NiO sont ensuite traitées en se mélangeant à d'autres oxydes métalliques tels que le cobalt et/ou le manganèse, puis traitées thermiquement et/ou mécaniquement.

11. Une méthode selon l'une des revendications 1 à 10, dans laquelle le flux de produit contient du monoxyde de carbone qui est séparé et éliminé à l'étape (a)₋₁).

12. Méthode de préparation d'un matériau cathodique actif contenant des particules de NiO, intégrant les étapes suivantes
b1) la préparation des particules de NiO selon le procédé de production des particules de NiO de l'une des revendications 1 à 11 ;
b2) mélanger les particules de NiO avec un ou plusieurs autres oxydes métalliques et, en option, avec un ou plusieurs autres composants du matériau cathodique actif ; et
b3) Calcination du mélange à partir de l'étape b2) pour obtenir le matériau actif de la cathode.

13. Une méthode selon la revendication 12, dans laquelle un ou plusieurs autres oxydes métalliques sont de l'oxyde de cobalt, de l'oxyde de nickel, de l'oxyde de cobalt et de l'oxyde de nickel.

14. Une méthode selon la revendication 12 ou 13, dans laquel, à l'étape (b2), des particules de NiO sont mélangées avec un ou plusieurs autres oxydes métalliques et avec un ou plusieurs autres composants du matériau actif cathodique, un ou plusieurs autres composants étant de préférence une source de lithium.

15. Une méthode selon l'une des revendications 12 à 14, où, à l'étape (b2), les particules de NiO sont mélangées avec un ou plusieurs autres oxydes métalliques et avec un ou plusieurs autres composants du matériau actif cathodique, un ou plusieurs autres composants étant de préférence une source de sodium.
